# EUROPÄISCHE PATENTSCHRIFT

(11) **EP 4 547 436 B1**
(45) Veröffentlichungstag und Bekanntmachung des Hinweises auf die Patenterteilung: **11.03.2026**
(21) Anmeldenummer: 23733014.7
(22) Anmeldetag: 27.06.2023
(51) Int. Cl.: B23K 9/09, B23K 9/12, B23K 9/167

(54) **SCHWEISSVERFAHREN UND SCHWEISSVORRICHTUNG**
WELDING METHOD AND WELDING DEVICE
PROCÉDÉ DE SOUDAGE ET POSTE DE SOUDURE

(30) Priorität: 30.06.2022 EP 22182388
(43) Veröffentlichungstag der Anmeldung: 07.05.2025
(73) Patentinhaber: FRONIUS INTERNATIONAL GmbH, 4643 Pettenbach (AT)
(72) Erfinder: LATTNER, Peter, 4600 Wels-Thalheim (AT); SÖLLINGER, Dominik, 4600 Wels-Thalheim (AT)
(74) Vertreter: Patentanwälte Pinter & Weiss OG
(86) Internationale Anmeldenummer: PCT/EP2023/067365
(87) Internationale Veröffentlichungsnummer: WO 2024/002994

(56) Entgegenhaltungen:
- DE-A1- 102015 210 741
- US-A1- 2020 246 902

## Beschreibung

Die Erfindung betrifft ein Schweißverfahren, wobei auf einem Werkstück im Bereich einer Schweißstelle mittels einer nicht abschmelzenden Elektrode als Wärmequelle Energie eingebracht wird, um ein Schmelzbad zu erzeugen, wobei dem Schmelzbad ein von der Wärmequelle separater Schweißdraht zugeführt wird und wobei der Schweißdraht durch die eingebrachte Energie im Bereich des Schmelzbades abgeschmolzen wird, um eine Schweißnaht am Werkstück zu erzeugen. Weiters betrifft die Erfindung eine Schweißvorrichtung umfassend einen Schweißbrenner mit einer nicht abschmelzenden Elektrode als Wärmequelle zum Einbringen von Energie an einer Schweißstelle an einem Werkstück zur Erzeugung eines Schmelzbades, umfassend eine Vorschubeinrichtung zum Zuführen eines von der Wärmequelle separaten Schweißdrahts zum Schmelzbad, wobei der Schweißdraht durch die von der Wärmequelle eingebrachte Energie im Bereich des Schmelzbades abschmelzbar ist, um eine Schweißnaht am Werkstück zu erzeugen und umfassend eine Steuerungseinheit zur Steuerung der Vorschubeinrichtung.

Die Erfindung betrifft im Allgemeinen eine Schweißvorrichtung, die aus der DE 10 2015 210741 bekannt ist, umfassend einen Schweißbrenner mit einer Wärmequelle zum Einbringen von Energie an einer Schweißstelle am Werkstück zur Erzeugung eines Schmelzbades, wobei dem Schmelzbad unabhängig von der Wärmequelle ein separater Zusatzstoff in Form eines Schweißdrahts zugeführt wird. Der Schweißdraht wird ebenfalls durch die Energie der Wärmequelle aufgeschmolzen, um eine Schweißnaht am Werkstück zu erzeugen. Beispiele dafür sind z.B. das bekannte WIG-Schweißen (Wolfram Inertgas Schweißen), bei dem eine nicht-abschmelzenden Elektrode aus Wolfram oder einer Wolframlegierung als Wärmequelle verwendet wird, oder das bekannte Plasma-Schweißen, bei dem ebenfalls eine nicht-abschmelzenden Elektrode verwendet wird.

Beim WIG-Schweißen wird zwischen der Elektrode und dem Werkstück ein Lichtbogen erzeugt, durch den einerseits das Schmelzbad am Werkstück erzeugt wird und andererseits der Schweißdraht abgeschmolzen wird.

Auch eine Kombination aus WIG-Schweißen und Laserschweißen ist bekannt, man spricht dabei auch vom WIG/Laser-Hybridschweißen. Dabei wird das Schmelzbad einerseits durch die Energie des Lichtbogens und andererseits durch die Energie des Laserstrahls erzeugt. In allen Fällen wird der Zusatzstoff in Form eines Schweißdrahts separat zugeführt, was in der Regel durch eine Vorschubeinheit erfolgt.

Von den genannten Schweißverfahren zu unterscheiden sind Schweißverfahren mit abschmelzender Elektrode, bei welchen der Schweißdraht unmittelbar als Elektrode verwendet wird, wie z.B. das bekannte MIG/MAG Schweißen. Hierbei ist kein separater Zusatzstoff erforderlich, sondern die Elektrode bildet zugleich den Schweißdraht aus. Diese Schweißverfahren sind von der Erfindung nicht umfasst.

Beim WIG-Schweißen wird ein Schweißstrom über die Elektrode geleitet, um den Lichtbogen zwischen der Elektrode und dem Werkstück aufzubauen und aufrechtzuerhalten. Üblicherweise wird auch ein inertes Schutzgas (üblicherweise Argon oder Helium) verwendet, um einen Kontakt der Schmelze mit der Umgebungsluft zu verhindern. Zusätzlich kann auch in den Schweißdraht ein elektrischer Heizstrom eingebracht werden, um den Schweißdraht elektrisch aufzuheizen und das Abschmelzen des Zusatzwerkstoffes zu unterstützen.

Meist wird der Schweißdraht der Schweißstelle mit einer Vorschubeinheit zugeführt. Dabei wird in der Regel ein voreingestellter oder einstellbarer, meist konstanter, Wert für die Vorschubgeschwindigkeit verwendet, der ggf. von der eingestellten Schweißstromhöhe abhängig sein kann. Dabei kommt es jedoch immer wieder vor, dass der Schweißdraht zu tief in das Schmelzbad eintaucht oder dass der Schweißdraht den Kontakt zum Schmelzbad verliert und sich zu weit vom Schmelzbad entfernt. In beiden Fällen wird dadurch das Schweißergebnis verschlechtert und kann zu ungleichmäßigen Schweißnähten oder zu Fehlern in der Schweißnaht führen. Das tritt speziell bei einer händischen Führung des Schweißbrenners auf, da sich bestimmte Einflussparameter, welche die auf den Schweißdraht wirkende Energie beeinflussen, vom Schweißer nicht immer exakt eingehalten werden können. Zu diesen Einflussparametern zählen beispielsweise der Abstand des Schweißbrenners zum Werkstück oder ein Winkel zwischen dem Schweißdraht und der Elektrode. Aber auch bei robotergeführten Schweißbrennern kann das auftreten, beispielsweise beim Schweißen komplexerer Geometrien und/oder bei unterschiedlichen Schweißgeschwindigkeiten.

Um dieses Problem zu beseitigen ist aus der WO 2010/082081 A1 schon bekannt geworden, den Heizstrom durch den Schweißdraht zu nutzen, um die Änderung einer Spannung zwischen dem Schweißdraht und dem Werkstück zu detektieren. Überschreitet die Änderung der Spannung einen vorgegebenen Grenzwert, wird der Heizstrom für eine definierte Zeitspanne auf einen sehr kleinen Wert abgesenkt, um das schnelle Abschmelzen des Schweißdrahtes zu verhindern. Mit dem verbleibenden kleinen Heizstrom wird der erneute Kontakt des Schweißdrahtes mit dem Werkstück (genauer mit dem Schmelzbad) detektiert. Bei einem solchen Kontakt entsteht ein Kurzschluss, wodurch die Spannung zwischen Schweißdraht und Werkstück gegen Null absinkt. Wird erneuter Kontakt erkannt, wird der Heizstrom durch den Schweißdraht wieder erhöht. Dieses Verfahren ist damit nur für Heißdraht Anwendungen (mit Zusatzheizung des Schweißdrahtes durch einen Heizstrom) anwendbar, jedoch nicht für eine Kaltdraht Anwendung (ohne einen solchen Heizstrom).

In der JP 60-036860 B wird das sich einstellende elektrische Potential um die Elektrode ausgewertet, um die Position des Schweißdrahtes relativ zum Werkstück zu verändern. Das elektrische Potential kann als Spannung zwischen Schweißdraht und Werkstück gemessen werden und wird verwendet, um daraus die Eintauchlage des Schweißdrahtes in das Schmelzbad abzuleiten. Damit wird die Position des Schweißdrahtes relativ zum Werkstück, konkret der Abstand des Schweißdrahtes zum Werkstück, geregelt, um eine optimale Eintauchlage einzustellen. Dieses Verfahren basiert darauf, dass immer Kontakt zwischen dem Schmelzbad und dem Schweißdraht vorhanden ist. Damit liegt aber praktisch immer ein Kurzschluss zwischen Schweißdraht und Werkstück vor und die detektierbaren Spannungen sind sehr klein und in einem sehr engen Bereich, was das Verfahren störanfällig und unzuverlässig macht. Abgesehen davon wird ein zusätzlicher Regler und Aktuator benötigt, um die Position des Schweißdrahtes relativ zum Werkstück und auch relativ zum Schweißbrenner verstellen zu können.

Die Schrift US 2020/246902 A1 betrifft weiters ein MIG/MAG-Schweißverfahren, bei dem während des Schweißens eine Summe von Zeitdauern verändert wird. Da es sich dabei um ein MIG/MAG-Schweißverfahren handelt, wird auf Spezifika und spezielle Probleme von WIG-Schweißverfahren allerdings nur unzureichend eingegangen.

Es ist daher eine Aufgabe der gegenständlichen Erfindung ein Schweißverfahren, und eine entsprechende Schweißvorrichtung, mit einer Wärmequelle und einem Schweißzusatzwerkstoff in Form eines Schweißdrahtes anzugeben, mit denen auf einfache Weise und unabhängig von der Geschicklichkeit des Schweißers eine möglichst hohe und gleichbleibende Schweißqualität erreicht werden kann.

Diese Aufgabe wird erfindungsgemäß mit dem eingangs genannten Schweißverfahren dadurch gelöst, dass der Schweißdraht dem Schmelzbad in intermittierenden Vorschubzyklen, vorzugsweise mit einer reversierenden Vorschubgeschwindigkeit, zugeführt wird, dass während der Durchführung des Schweißverfahrens ein Istwert einer Zeitdauer eines ersten Zeitraums jeweils eines Vorschubzyklus ermittelt wird, in welchem der Schweißdraht das Schmelzbad nicht berührt und/oder ein Istwert einer Zeitdauer eines zweiten Zeitraums jeweils eines Vorschubzyklus ermittelt wird, in welchem der Schweißdraht das Schmelzbad berührt, und dass zumindest ein festgelegter Parameter der Vorschubgeschwindigkeit des Schweißdrahts in den Vorschubzyklen in Abhängigkeit des ermittelten Istwerts und eines vorgegebenen Sollwerts verändert wird. Vorzugsweise wird als Parameter der Vorschubgeschwindigkeit eine mittlere Vorschubgeschwindigkeit eines gesamten Vorschubzyklus verwendet und/oder eine mittlere positive Vorschubgeschwindigkeit eines Vorschubzyklus und/oder eine mittlere negative Vorschubgeschwindigkeit eines Vorschubzyklus. Ein Vorschubzyklus besteht dabei aus einem ersten Zeitraum mit positiver Vorschubgeschwindigkeit des Schweißdrahts und einem darauffolgenden zweiten Zeitraum mit Vorschubgeschwindigkeit Null oder mit negativer Vorschubgeschwindigkeit. Mit dem erfindungsgemäßen Schweißverfahren kann somit der Parameter der Vorschubgeschwindigkeit laufend angepasst werden, um den Sollwert einzustellen. Dadurch kann im Wesentlichen unabhängig von den eingangs genannten veränderlichen Parametern eine gleichmäßige Schweißnaht mit hoher Qualität erzeugt werden. Auch mehrere der genannten Parameter können verändert werden.

Erfindungsgemäß wird als Istwert die Zeitdauer des ersten Zeitraums jeweils eines Vorschubzyklus ermittelt und als Sollwert ein Sollwert für die erste Zeitdauer verwendet oder als Istwert die Zeitdauer des zweiten Zeitraums jeweils eines Vorschubzyklus ermittelt und als Sollwert ein Sollwert für die zweite Zeitdauer verwendet oder als Istwert eine Summe aus der Zeitdauer des ersten Zeitraums und der Zeitdauer des zweiten Zeitraums jeweils eines Vorschubzyklus ermittelt und als Sollwert ein Sollwert für eine Tropfenübergabe-Frequenz verwendet. Wenn beispielsweise erkannt wird, dass die aktuelle Zeitdauer des ersten Zeitraums länger als der vorgegebene Sollwert ist, dann wird der Parameter der Vorschubgeschwindigkeit des Schweißdrahts verändert, um den Sollwert einzustellen, z.B. kann die mittlere Vorschubgeschwindigkeit je Zyklus oder die mittlere positive Vorschubgeschwindigkeit je Zyklus verändert, insbesondere erhöht, werden. Wenn umgekehrt beispielsweise erkannt wird, dass die aktuelle Zeitdauer des ersten Zeitraums kürzer als der vorgegebene Sollwert ist, dann wird die mittlere Vorschubgeschwindigkeit des Schweißdrahts oder die mittlere positive Vorschubgeschwindigkeit verringert. Dadurch ist es möglich, dass die Zeitdauer des ersten Zeitraums, in welchem der Schweißdraht das Schmelzbad nicht berührt, während des gesamten Schweißverfahrens im Wesentlich konstant gehalten werden kann. Alternativ zum ersten Zeitraum kann natürlich auch der zweite Zeitraum verwendet werden, in dem der Schweißdraht das Schmelzbad berührt. Der zweite Zeitraum entspricht im Wesentlichen jenem Zeitraum, der zwischen zwei aufeinanderfolgenden ersten Zeiträumen liegt. Auch eine Summe aus der Zeitdauer des ersten Zeitraums und der Zeitdauer des zweiten Zeitraums, was einer Tropfenübergabe-Frequenz entspricht, kann verwendet werden.

Die mittlere Vorschubgeschwindigkeit oder die mittlere positive Vorschubgeschwindigkeit kann beispielsweise verändert werden, indem am Beginn jedes Vorschubzyklus' die Vorschubgeschwindigkeit für eine festgelegte Boost-Zeit auf einen festgelegten ersten positiven Wert eingestellt wird und nach Ablauf der Boost-Zeit vom ersten Wert auf einen festgelegten zweiten positiven Wert verringert wird, wobei der erste Wert und/oder ein Verhältnis zwischen dem ersten Wert und dem zweiten Wert und/oder eine Länge der Boost-Zeit vorzugsweise in Abhängigkeit eines Fehlers zwischen dem ermittelten Istwert und dem vorgegebenen Sollwert festgelegt werden kann. Dadurch kann die mittlere Vorschubgeschwindigkeit bzw. die mittlere positive Vorschubgeschwindigkeit einfach - verändert werden und es können in vorteilhafter Weise ungünstige Effekte aufgrund der Massenträgheit des Schweißdrahts verringert werden.

Vorzugsweise wird die Energie über einen elektrischen Lichtbogen in das Werkstück eingebracht, der zwischen einer nicht abschmelzenden Elektrode und dem Werkstück erzeugt wird. Dadurch kann die Erfindung beim bekannten WIG-Schweißverfahren verwendet werden. Zusätzlich kann die Energie auch durch einen Laserstrahl in das Werkstück eingebracht werden, der von einer Laseroptik erzeugt wird. Dadurch kann die Erfindung beim Laser-Hybrid-Schweißverfahren verwendet werden.

Der Istwert der Zeitdauer des ersten Zeitraums und/oder der Istwert der Zeitdauer des zweiten Zeitraums zeitkontinuierlich oder zeitdiskret ermittelt werden. Beispielsweise kann eine zeitdiskrete Ermittlung lediglich in den Zeitschritten der nachfolgend genannten Regelung erfolgen, wodurch keine ununterbrochene Ermittlung erforderlich ist.

Der vorgegebene Sollwert wird vorzugsweise durch eine Veränderung des zumindest einen Parameters der Vorschubgeschwindigkeit eingeregelt. Dadurch kann eine Feedback-Regelung verwendet werden, wodurch eine sehr exakte Einstellung des Sollwerts ermöglicht wird. Damit kann unabhängig von Störeinflüssen eine gleichbleibende Schweißqualität erreicht werden.

Der Sollwert kann beispielsweise in Abhängigkeit eines Durchmessers des Schweißdrahts und/oder in Abhängigkeit eines Materials des Schweißdrahts und/oder in Abhängigkeit eines elektrischen Schweißparameters, insbesondere eines Schweißstroms, und/oder in Abhängigkeit einer Nahtform der Schweißnaht festgelegt werden. Damit können bei der Wahl des Sollwerts verschiedene Einflussparameter berücksichtigt werden, wodurch das Verfahren flexibel an bestimmte Randbedingungen angepasst werden kann. Der Sollwert kann vom Schweißer beispielsweise über eine Benutzerschnittstelle festgelegt oder aus vorhandenen Werten ausgewählt werden.

Vorzugsweise wird am Schweißdraht ein elektrisches Potential abgegriffen und der Istwert der Zeitdauer des ersten Zeitraums und/oder der Istwert der Zeitdauer des zweiten Zeitraums werden aus einem zeitlichen Verlauf des erfassten elektrischen Potentials ermittelt. Dadurch kann in einfacher Weise detektiert werden, wann und wie lange der Schweißdraht das Werkstück berührt.

Das elektrische Potential kann beispielsweise abgegriffen werden, indem eine elektrische Messspannung zwischen dem Schweißdraht und dem Werkstück und/oder ein durch den Schweißdraht fließender elektrischer Messstrom gemessen werden und der Istwert der Zeitdauer des ersten Zeitraums und/oder der Istwert der Zeitdauer des zweiten Zeitraums aus einem zeitlichen Verlauf der Messspannung und/oder des Messstroms ermittelt wird.

Optional könnte zwischen dem Schweißdraht und dem Werkstück auch ein zusätzliches elektrisches Grundpotential erzeugt werden, um zu jeder Zeit eine Messung zu ermöglichen, auch wenn kein elektrisches Potential um den Schweißdraht vorliegt.

Die Aufgabe wird zudem mit der eingangs genannten Schweißvorrichtung dadurch gelöst, dass die Steuerungseinheit dazu ausgebildet ist, die Vorschubeinrichtung so anzusteuern, dass der Schweißdraht dem Schmelzbad in intermittierenden Vorschubzyklen, vorzugsweise mit einer reversierenden Vorschubgeschwindigkeit, zuführbar ist, dass eine Ermittlungseinheit vorgesehen ist, die dazu ausgebildet ist, während eines mit der Schweißvorrichtung durchgeführten Schweißverfahrens einen Istwert einer Zeitdauer eines ersten Zeitraums jeweils eines Vorschubzyklus zu ermitteln, in welchem der Schweißdraht das Schmelzbad nicht berührt und/oder einen Istwert einer Zeitdauer eines zweiten Zeitraums jeweils eines Vorschubzyklus zu ermitteln, in welchem der Schweißdraht das Schmelzbad berührt und dass die Steuerungseinheit dazu ausgebildet ist, die Vorschubeinrichtung anzusteuern, um zumindest einen festgelegten Parameter der Vorschubgeschwindigkeit des Schweißdrahts in den Vorschubzyklen in Abhängigkeit des ermittelten Istwerts und eines vorgegebenen Sollwerts zu verändern.

Vorteilhafte Ausgestaltungen der Schweißvorrichtung sind in den Ansprüchen 10 bis 14 angegeben.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine Schweißvorrichtung mit einem Schweißbrenner mit nicht-abschmelzender Elektrode,
Fig.2 eine nicht-abschmelzende Elektrode mit einem durch den Schweißstrom verursachten Potentialfeld um den Lichtbogen,
Fig.3 eine vorteilhafte Ausführungsform der erfindungsgemäßen Schweißvorrichtung,
Fig.4 zeitliche Verläufe eines Istwerts des Potentials, eines Sollwerts des Potentials und einer Vorschubgeschwindigkeit des Schweißdrahts.

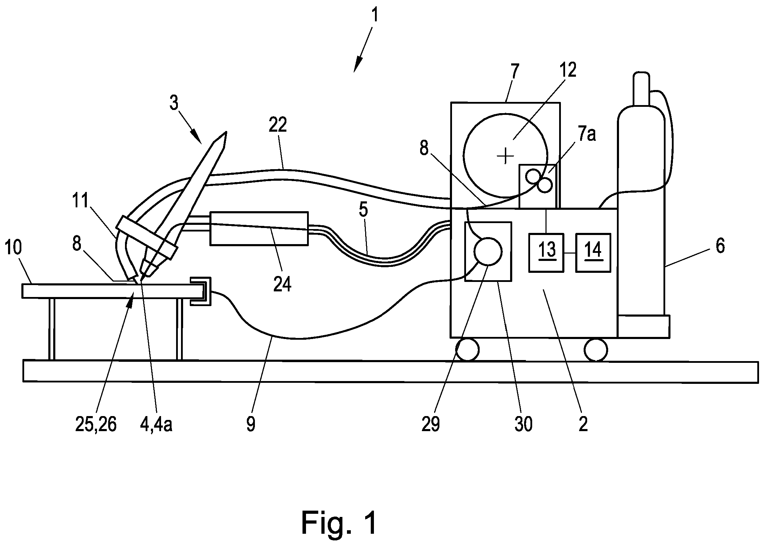

In Fig.1 ist eine Schweißvorrichtung 1 in Form einer WIG-Schweißvorrichtung dargestellt. Die Schweißvorrichtung 1 weist eine Schweißstromquelle 2 und einen Schweißbrenner 3 auf, an dem eine Wärmequelle 4 in Form einer nicht-abschmelzenden Elektrode 4a angeordnet ist, z.B. eine Wolfram Elektrode. Im Rahmen der Erfindung könnte die Wärmequelle 4 aber zusätzlich zur nicht-abschmelzenden Elektrode 4a auch eine (nicht dargestellte) Laseroptik aufweisen. Die Erfindung wird nachfolgend jedoch der Einfachheit halber nur anhand des WIG-Schweißens beschrieben, ist aber natürlich in analoger Weise auch auf das eingangs genannte WIG/Laser-Hybridschweißen anwendbar.

Im dargestellten Beispiel ist der Schweißbrenner 3 mittels eines Schlauchpakets 5 mit der Schweißstromquelle 2 verbunden. Zusätzlich ist ein Schutzgasbehälter 6 vorgesehen. Übliche Flaschenarmaturen am Schutzgasbehälter 6, beispielsweise zur Einstellung des Durchflusses von Schutzgas, sind nicht dargestellt. Ferner ist eine Vorschubeinheit 7 vorgesehen, um der Schweißstelle 25 einen Schweißdraht 8 als Schweißzusatzwerkstoff zuzuführen. Die Vorschubeinheit 7 kann Teil der Schweißstromquelle 2 sein, kann aber auch als eigenständige Einheit ausgeführt sein. In der Vorschubeinheit 7 ist eine Schweißdrahtrolle 12 angeordnet, von der der Schweißdraht 8 beim Schweißen abgerollt und der Schweißstelle 25 mit einer Vorschubgeschwindigkeit v zugeführt wird. Zur Erzeugung der Vorschubgeschwindigkeit v weist die Vorschubeinheit 7 eine geeignete und ausreichend leistungsfähige Antriebseinheit 7a auf.

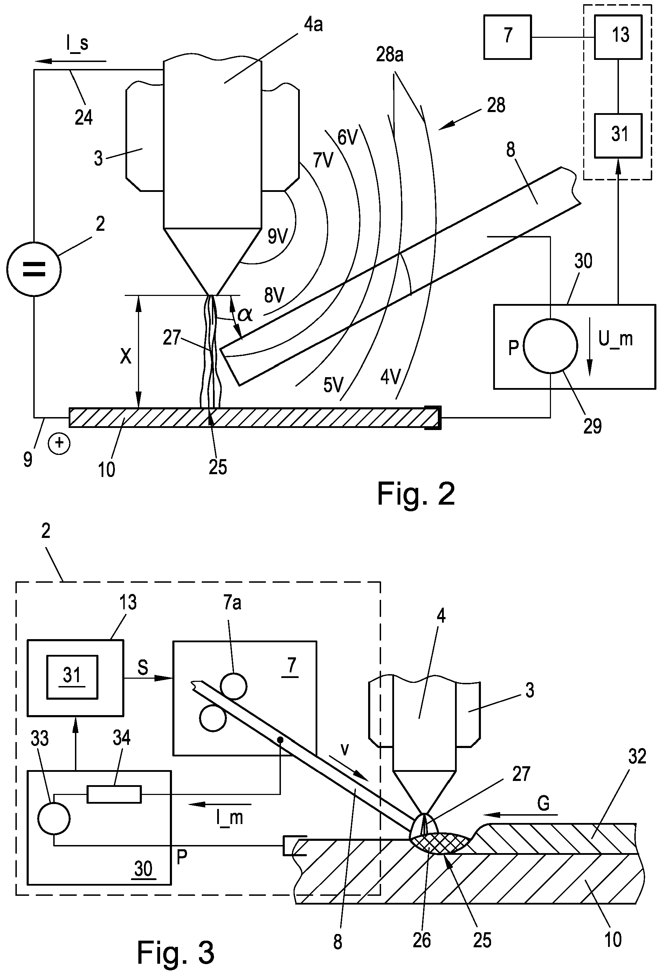

Weiters ist eine Steuerungseinheit 13 zur Steuerung der Schweißvorrichtung 1 vorgesehen. Die Steuerungseinheit 13 ist im Rahmen der Erfindung zumindest dazu ausgebildet ist, die Vorschubeinheit 7, insbesondere die Antriebseinheit 7a, zu steuern, um die Vorschubgeschwindigkeit v des Schweißdrahts 8 auf einen gewünschten Wert einzustellen. Der Schweißdraht 8 wird der Schweißstelle im Rahmen der Erfindung in intermittierenden Vorschubzyklen zugeführt, wie nachfolgend anhand von Fig.3 noch näher erläutert wird. Ein Vorschubzyklus C weist dabei einen ersten Zeitraum mit positiver Vorschubgeschwindigkeit v auf und einen zweiten Zeitraum Z2 mit Vorschubgeschwindigkeit Null oder negativer Vorschubgeschwindigkeit auf (bei reversierendem Drahtvorschub). Die Steuerungseinheit 13 kann in bekannter Weise eine geeignete Hard- und/oder Software aufweisen. Vorzugsweise ist die Steuerungseinheit 13 aber auch zur Steuerung des mit der Schweißvorrichtung 1 durchgeführten Schweißverfahrens ausgebildet. Neben der Steuerung der Vorschubgeschwindigkeit v kann die Steuerungseinheit 13 somit auch die Schweißparameter eines durchgeführten Schweißprozesses steuern oder regeln, z.B. den Schweißstrom I_s, die Schweißspannung U_s, eine Frequenz des Schweißstroms I_s oder der Schweißspannung U_s, die zugeführte Menge an Schutzgas, usw. Natürlich könnten auch mehrere separate Steuerungseinheiten vorgesehen sein, die über eine geeignete Kommunikationsverbindung miteinander kommunizieren, um Steuerungsgrößen auszutauschen. Wesentlich für die Erfindung ist jedoch die Steuerung der Vorschubgeschwindigkeit v, sodass nachfolgend hauptsächlich nur auf die Steuerungseinheit 13 Bezug genommen wird.

In der Schweißvorrichtung 1 kann auch eine Benutzerschnittstelle 14 vorgesehen sein, die in geeigneter Weise mit der Steuerungseinheit 13 kommuniziert. Über die Benutzerschnittstelle 14 kann ein Schweißer z.B. ein Schweißprogramm oder einen bestimmten Schweißprozess mit vorgegebenen Schweißparametern auswählen (z.B. einen Impulsschweißprozess mit einem bestimmten Schweißstrom I_s und einer bestimmten Frequenz). Ebenso können manuell gewisse Einstellungen gewählt oder verändert werden. Beispielsweise wurde die Vorschubgeschwindigkeit v des Schweißdrahts 8 bisher in der Regel vom Schweißer vorgegeben oder aus verfügbaren Werten ausgewählt und war in der Regel konstant.

Im Schlauchpaket 5 können alle benötigten Medien, Energien und Steuersignale zum Schweißbrenner 3 übertragen werden, beispielsweise elektrische Energie (Strom, Spannung), ein Kühlmedium (falls der Schweißbrenner 3 gekühlt ist), Steuerleitungen zum Steuern des Schweißprozesses, das Schutzgas des Schutzgasbehälters 6 oder der Schweißdraht 8. Üblicherweise ist als Schlauchpaket 5 ein Schlauch vorgesehen, in dem die einzelnen Leitungen und Medien geführt sind. Selbstverständlich können aber auch mehrere separate Schläuche oder Leitungen vorgesehen sein.

Am zu schweißenden Werkstück 10 ist über eine Kontaktleitung 9 der elektrische Gegenpol (üblicherweise der positive Pol) kontaktiert. Die Kontaktleitung 9 wird oftmals auch als Masseleitung bezeichnet. Am Schweißbrenner 3 kann auch eine Schweißdrahtzuführung 11 angeordnet sein, um den Schweißdraht 8 in einer gewünschten Lage und Richtung relativ zur Elektrode 4a der Schweißstelle 25 zuführen zu können. Die Schweißdrahtzuführung 11 kann auch mit einer Schweißdrahtleitung 22 verbunden sein, in der der Schweißdraht 8 separat, d.h. außerhalb des Schlauchpakets 5, zur Schweißdrahtzuführung 11 geführt wird. Die Schweißdrahtzuführung 11 muss aber nicht zwingend am Schweißbrenner 3 angeordnet sein, sondern kann auch an einer beliebig anderen geeigneten Stelle angeordnet sein, beispielsweise an einem Schweißroboter. Auch die Vorschubeinheit 7 muss nicht zwingend an der Schweißstromquelle 2 angeordnet sein, sondern kann auch an einer beliebig anderen geeigneten Stelle angeordnet sein, beispielsweise an einem Schweißroboter.

Am Schweißbrenner 3 ist in der Regel eine (nicht dargestellte) Kontakthülse angeordnet, die die Elektrode 4a umgibt und elektrisch kontaktiert und die über eine, meist innerhalb des Schlauchpakets 5 geführte, Schweißstromleitung 24 mit der Schweißstromquelle 2 verbunden ist (üblicherweise mit dem negativen Pol). Die Elektrode 4a ragt an einem Ende des Schweißbrenners 3 aus dem Schweißbrenner 3 heraus. Um die Elektrode 4a kann Schutzgas aus dem Schweißbrenner 3 austreten, das die Schweißstelle 25 mit dem Schmelzbad 26 umgibt und von der Umgebungsatmosphäre abschirmt (wie in Fig.3 angedeutet ist). Der Schweißdraht 8 wird der Schweißstelle 25 beim Schweißen in intermittierenden Vorschubzyklen C, optional mit reversierendem Drahtvorschub zugeführt. Reversierender Drahtvorschub bedeutet, dass sich eine positive Vorschubgeschwindigkeit im ersten Zeitraum Z1 verwendet wird und eine negative Vorschubgeschwindigkeit im zweiten Zeitraum Z2. Nachdem der grundsätzliche Aufbau und die grundsätzliche Funktion, und die diversen Abwandlungen hierzu, einer solchen Schweißvorrichtung 1 bekannt sind wird hier nicht näher darauf eingegangen.

Wie bereits erwähnt, könnte als Wärmequelle 4 zusätzlich zur gezeigten Elektrode 4a auch ein (nicht dargestellte) Laseroptik vorgesehen sein. Die Wärme wird hierbei zusätzlich zum Lichtbogen 27 (siehe Fig.2) durch einen Laserstrahl in das Werkstück 10 eingebracht.

Fig.2 zeigt eine detailliertere Ansicht des Schweißbrenners 3 im Bereich der Spitze der nicht-abschmelzenden Elektrode 4a, die sich an einer Schweißstelle 25 am Werkstück 10 befindet. Von der Schweißstromquelle 2 wird ein Schweißstrom I_s erzeugt (z.B. im Bereich von 100A), der über die Schweißleitung 24 durch die Elektrode 4a geleitet wird, um einen Lichtbogen 27 zwischen der Elektrode 4a und dem Werkstück 10 zu erzeugen bzw. aufrechtzuerhalten. Zur Zündung des Lichtbogens 27 können bekannte Methoden angewendet werden, beispielsweise eine Hochfrequenz Zündung oder Zündung durch das Berühren des Werkstücks 10 mit der Elektrode 4a und nachfolgendes Abheben der Elektrode 4a. Wenn der Schweißstrom I_s durch die Elektrode 4a fließt, dann bildet sich in bekannter Weise ein quasi-statisches elektrisches Feld 28 um die Elektrode 4a aus, wie in Fig.2 angedeutet ist.

Dieses quasi-statische elektrische Feld 28 führt zu einer Potentialverteilung im Umfeld der Elektrode 4a, wie in Fig.2 durch Äquipotentiallinien 28a beispielhaft angedeutet ist. Die Werte sind grundsätzlich unter anderem vom Schweißstrom, Kühlung der Elektrode, Schutzgas, Lichtbogenlänge (Abstand A), usw. abhängig, können aber als bekannt vorausgesetzt werden. Dieses Potential P kann als elektrische Größe, z.B. als elektrische Messspannung U_m oder als elektrischer Messstrom I_s, von einer geeigneten Potentialerfassungseinheit 30 erfasst werden. Die Potentialerfassungseinheit 30 kann dazu beispielsweise ein Spannungsmessgerät 29 aufweisen, mit dem die Messspannung U_m gegen ein Bezugspotential abgegriffen werden kann. In Fig.2 sind an den Äquipotentiallinien 28a beispielhafte Spannungswerte gegen das Potential P des Werkstücks 10 als Bezugspotential eingezeichnet. Dieses elektrische Potential P wird über den Schweißdraht 8, der der Schweißstelle 25 zugeführt wird und sich damit im quasi-statischen elektrischen Feld befindet, abgegriffen und mit dem Spannungsmessgerät 29 erfasst. Dazu muss kein eigener Messstrom über den Schweißdraht 8 geleitet werden. Ebenso wenig stört ein möglicher Heizstrom zum Aufheizen des Schweißdrahtes 8 die Erfassung des Potentials P. Das Potential P kann damit sowohl bei Kaltdraht, als auch bei Heißdraht Anwendungen abgegriffen werden.

Anstelle einer elektrischen Messspannung U_m kann in analoger Weise auch ein durch den Schweißdraht 8 fließender elektrischer Messstrom I_m, der durch das Potential P hervorgerufen wird, gemessen werden, wie beispielhaft in Fig.3 dargestellt ist. Hierzu kann beispielsweise zwischen dem Schweißdraht 8 und dem Werkstück 10 ein Abschlusswiderstand 34 geschaltet sein, über den ein elektrischer Strom fließt, der zur Erfassung des Potentials P als Messstrom I_m gemessen werden kann. Die Potentialerfassungseinheit 30 weist hierbei ein geeignetes Strommessgerät 33 auf, wie in Fig.3 dargestellt ist. Natürlich könnte statt Messstrom I_m und Messspannung U_m aber in gleicher Weise eine andere mit der Potentialverteilung in Zusammenhang stehende elektrische Größe erfasst oder ermittelt werden, beispielsweise könnte aus der Messspannung U_m und dem Messstrom I_m ein Widerstand oder eine Leistung ermittelt werden. Im Rahmen der Erfindung sind unter dem Abgreifen des elektrischen Potentials P daher alle diese Möglichkeiten umfasst.

Wie in Fig.3 angedeutet ist, kann die Potentialerfassungseinheit 30 beispielsweise in der Schweißstromquelle 2 angeordnet sein, in der das Bezugspotential des Werkstücks 10 ohnehin vorhanden ist, beispielsweise über die Kontaktleitung 9 oder einer eigenen Leitung zum Kontaktieren des Werkstücks 10. Vorteilhaft ist die Verwendung der Kontaktleitung 9, da dann auf eine zusätzliche Leitung verzichtet werden kann. Bei Verwendung der Kontaktleitung 9 kann die Potentialerfassungseinheit 30 beispielsweise mit dem Anschluss der Kontaktleitung 9 (Massebuchse) an der Schweißvorrichtung 1 verbunden sein. Es ist in der Schweißvorrichtung 1 lediglich zusätzlich die Potentialerfassungseinheit 30 vorzusehen, um eine das elektrische Potential P repräsentierende elektrische Größe, beispielsweise die elektrische Messspannung U_m, zu erfassen. Dazu kann einfach ein elektrischer Kontakt am Schweißdraht 8 realisiert sein, beispielsweise als Schleifkontakt in der Vorschubeinheit 7. Gegebenenfalls ist zwischen dem Schweißdraht 8 und dem Werkstück, oder der Kontaktleitung 9, oder einem anderen Bezugspotential, ein Abschlusswiderstand 34 vorzusehen, der auch Teil der Potentialerfassungseinheit 30 sein kann.

Aus der für das Potential P repräsentativen elektrischen Größe (Messspannung U_m, Messstrom I_m, usw.) kann aufgrund der sich einstellenden Potentialverteilung auf einfache Weise erkannt werden, ob der Schweißdraht 8 das von der Elektrode 4a durch den Lichtbogen 27 erzeugte Schmelzbad 26 berührt oder ob der Schweißdraht 8 zu weit vom Schmelzbad 26 entfernt ist und das Schmelzbad 26 nicht berührt. Wenn der Schweißdraht 8 das Schmelzbad 26 berührt entsteht ein Kurzschluss, wodurch die vom Spannungsmessgerät 29 gemessene Messspannung U_m auf Null (oder im Wesentlichen Null) einbricht oder der von der Strommesseinheit 33 gemessene Messstrom I_m auf Null (oder im Wesentlichen Null) einbricht. Dasselbe gilt auch für allfällige daraus abgeleitete Größen. Wenn der Schweißdraht 8 das Schmelzbad 26 nicht berührt, werden umgekehrt ein gewisser Messstrom I_m bzw. eine bestimmte Messspannung U_m gemessen, die abhängig von der Höhe des Potentials P sind.

Ggf. kann auch eine (nicht dargestellte) zusätzliche Hilfsenergiequelle im Messtromkreis der Potentialerfassungseinheit 30 vorgesehen sein, um ein bestimmtes Grund-Potential zu erzeugen. Dies ist für Anwendungen vorteilhaft, bei denen sich kein oder nur ein geringes elektrisches Feld um die Wärmequelle 4 bildet, wie z.B. beim reinen Laserschweißen, bei dem die Wärmequelle 4 eine Laseroptik 4a aufweist. Durch die Hilfsenergiequelle steht unabhängig vom Potential P des elektrischen Feldes zu jeder Zeit ein messbares elektrisches Potential zur Verfügung, das für die Messung verwendet werden kann. Die Hilfsenergiequelle kann beispielsweise als hochohmige Spannungsquelle ausgebildet sein, mit der eine elektrische Hilfsspannung an den Schweißdraht 8 angelegt werden kann. Damit könnte beim WIG-Schweißen z.B. auch vor dem Zünden des Lichtbogens 27 ein Potential P erfasst werden und anhand dessen ermittelt werden kann, ob der Schweißdraht 8 das Werkstück 10 kontaktiert, insbesondere ob ein Kurzschluss vorliegt.

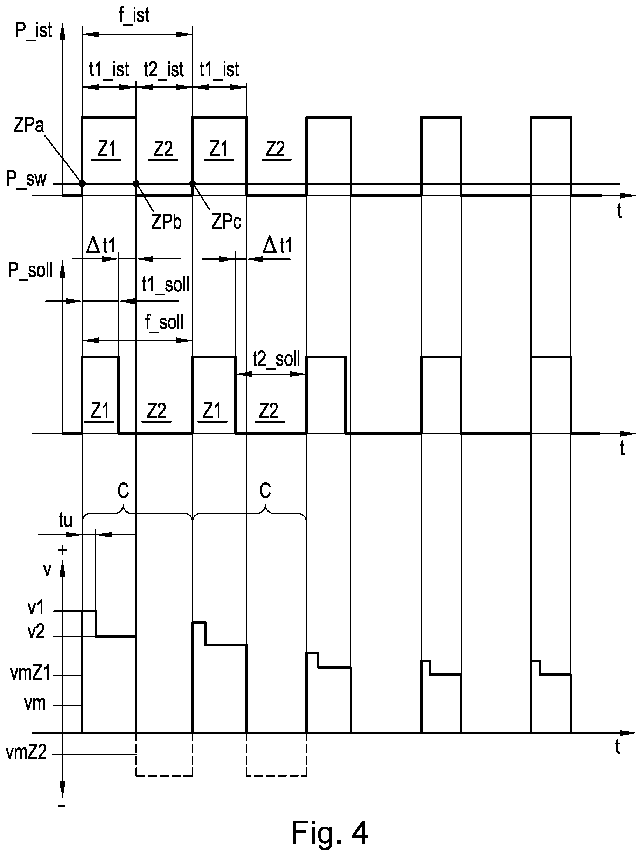

Gemäß der Erfindung ist weiters eine Ermittlungseinheit 31 vorgesehen, die dazu ausgebildet ist, während der Durchführung des Schweißverfahrens einen Istwert t1_ist einer Zeitdauer t1 eines ersten Zeitraums Z1 jeweils eines Vorschubzyklus C zu ermitteln, in welchem der Schweißdraht 8 das Schmelzbad 26 oder das Werkstück 10 nicht berührt. Alternativ oder zusätzlich könnte die Ermittlungseinheit 31 auch dazu ausgebildet sein, einen Istwert t2_ist einer Zeitdauer t2 eines zweiten Zeitraums Z2 jeweils eines Vorschubzyklus C zu ermitteln, in welchem der Schweißdraht 8 das Schmelzbad 26 bzw. das Werkstück 10 berührt. Die Zeitdauer t1, t2 sowie die Zeiträume Z1, Z2 sind in Fig.4 dargestellt.

Die Ermittlungseinheit 31 kann als separate Einheit ausgebildet sein, die eine geeignete Hard- und/oder Software aufweist, und die über eine geeigneter Kommunikationsverbindung mit der Steuerungseinheit 13 kommuniziert, wie in Fig.2 angedeutet ist. Vorteilhafterweise ist die Ermittlungseinheit 31 jedoch in der Steuerungseinheit 13 integriert, wie in Fig.3 angedeutet ist. Die Steuerungseinheit 13 ist erfindungsgemäß dazu ausgebildet, die Vorschubeinrichtung 7, insbesondere die Antriebseinheit 7a, anzusteuern, um zumindest einen festgelegten Parameter der Vorschubgeschwindigkeit v des Schweißdrahts 8 in Abhängigkeit der ermittelten Istwerte t1_ist und/odert2_ist und eines vorgegebenen Sollwerts einzustellen.

Von der Ermittlungseinheit 31 kann aus der für das Potential P repräsentativen elektrischen Größe (Messspannung U_m, Messstrom I_m, usw.) aufgrund der sich einstellenden Potentialverteilung auf einfache Weise erkannt werden, ob der Schweißdraht 8 das von der Elektrode 4a durch den Lichtbogen 27 erzeugte Schmelzbad 26 berührt (Kurzschluss) oder ob der Schweißdraht 8 zu weit vom Schmelzbad 26 entfernt ist (kein Kurzschluss). Die Zeitdauer t1 des ersten Zeitraums Z1 (kein Kurzschluss) oder die Zeitdauer t2 des zweiten Zeitraums Z2 (Kurzschluss) kann dabei aus dem zeitlichen Verlauf der für das Potential P repräsentativen erfassten elektrischen Größe ermittelt werden, wie anhand von Fig.4 gezeigt ist.

In Fig.4 ist im oberen Diagramm ein beispielhafter zeitlicher Verlauf eines erfassten Potentials P dargestellt. Der Verlauf entspricht damit einem von der Potentialerfassungseinheit 30 gemessenen Verlauf eines Istwerts P_ist des Potentials P. Je nach gemessener Größe kann es sich dabei z.B. um einen Verlauf des Messstroms I_m oder um einen Verlauf der Messspannung U_m handeln. Im mittleren Diagramm ist ein korrelierender zeitlicher Verlauf eines Sollwerts P_soll des Potentials P dargestellt. Im unteren Diagramm ist ein korrelierender zeitlicher Verlauf der Vorschubgeschwindigkeit v des Schweißdrahts 8 dargestellt. Daraus ist ersichtlich, dass der Schweißdraht 8 dem Schmelzbad 26 in intermittierenden Vorschubzyklen C mit einer zeitlich veränderlichen, Vorschubgeschwindigkeit v zugeführt wird. Die Vorschubgeschwindigkeit v wird in jedem Zyklus C im jeweils ersten Zeitraum Z1 auf einen bestimmten positiven Wert eingestellt, hier die Werte v1, v2 (in Fig.4 der Einfachheit halber nur für den ersten Zyklus C dargestellt). Im nachfolgenden zweiten Zeitraum Z2 des Zyklus C wird im dargestellten Beispiel eine Vorschubgeschwindigkeit v=0 verwendet. Alternativ kann auch ein reversierender Drahtvorschubverwendet werden, bei dem im jeweils zweiten Zeitraum Z2 eine negative Vorschubgeschwindigkeit v verwendet, wie für zwei Vorschubzyklen C gestrichelt angedeutet ist Eine negative Vorschubgeschwindigkeit v entspricht dabei einem Zurückbewegen des Schweißdrahts vom Schmelzbad 26 weg und eine positive Vorschubgeschwindigkeit v entspricht einer Bewegung in Richtung des Schmelzbades 26.

Während der jeweils ersten Zeiträume Z1 ist der Schweißdraht 8 nicht in Kontakt mit dem Schmelzbad 26. Die ersten Zeiträume Z1 entsprechen somit einer kurzschlussfreien Zeit, in welcher das durch die Potentialerfassungseinheit 30 gemessene Potential P_ist größer als Null ist bzw. größer ist als ein festgelegter Wert, der den Kurzschluss repräsentiert. Die jeweils zwischen zwei ersten Zeiträumen Z1 liegenden zweiten Zeiträume Z2 entsprechen einer Kurzschlusszeit, in der das durch die Potentialerfassungseinheit 30 gemessene Potential P_ist Null ist bzw. einen Wert einnimmt, der einen Kurzschluss repräsentiert. Die Ermittlungseinheit 31 kann aus dem Istwert-Verlauf P_ist die aktuelle Zeitdauer t1_ist der ersten Zeiträume Z1 ermitteln, also die Länge der kurzschlussfreien Zeit. Alternativ kann die Ermittlungseinheit 31 aus dem Istwert-Verlauf P_ist auch die aktuelle Zeitdauer t2_ist der zweiten Zeiträume Z2 ermitteln, also die Länge der Kurzschlusszeit. Es kann auch die Zeitdauer eines gesamten Vorschubzyklus C ermittelt werden, was einer Summe der Zeitdauer t1_ist des ersten Zeitraums Z1 der Zeitdauer t2_ist des zweiten Zeitraums Z2 entspricht. Man spricht hierbei auch von einer sogenannten Tropfenablöse-Frequenz f. In Fig.3 sind die aktuelle Tropfenablöse-Frequenz f_ist sowie der gewünschte Sollwert f_soll der Tropfenablöse-Frequenz f beispielhaft für einen Vorschubzyklus C dargestellt.

Beispielsweise könnte ein bestimmter Schwellenwert P_sw für das Potential P festgelegt werden, der einen Kurzschluss repräsentiert. Der Schwellenwert P_sw kann z.B. Null oder geringfügig darüber betragen. In Fig.4 ist beispielhaft ein Schwellenwert P_sw eingezeichnet, der geringfügig größer als Null ist. Die Ermittlung des Istwerts t1_ist der Zeitdauer t1 kann dann beispielsweise dadurch erfolgen, dass eine Zeit zwischen einem Zeitpunkt ZPa, zu dem das gemessene Potential P_ist (z.B. Schweißstrom I_s oder Schweißspannung U_s) den festgelegten Schwellenwert P_sw überschreitet, und einem nachfolgenden Zeitpunkt ZPb, zu dem das gemessene Potential P_ist den festgelegten Schwellenwert P_sw wieder unterschreitet, gemessen werden. In analoger Weise kann die Zeitdauer t2 zwischen einem Zeitpunkt ZPb, zu dem das gemessene Potential P_ist den festgelegten Schwellenwert P_sw unterschreitet, und einem nachfolgenden Zeitpunkt ZPc, zu dem das gemessene Potential P_ist den festgelegten Schwellenwert P_sw wieder überschreitet, gemessen werden. Die Zeitpunkte ZPa-ZPc sind in Fig.4 im oberen Diagramm beispielhaft für den ersten Zyklus, bestehend aus einem ersten Zeitraum Z1 und einem nachfolgenden zweiten Zeitraum Z2, dargestellt. Die Ermittlung erfolgt aber natürlich dauerhaft während der Durchführung des Schweißprozesses, also für eine Vielzahl von Vorschubzyklen C. Der Istwert f_ist der Tropfenablöse-Frequenz f entspricht der Zeit zwischen dem Zeitpunkt ZPa und dem Zeitpunkt ZPc.

Die Ermittlung der Istwerte t1_ist, t2_ist der Zeiten t1, t2 erfolgt dabei vorzugsweise zeitkontinuierlich, könnte aber auch zeitdiskret, also in gewissen festgelegten Abständen erfolgen. Die Erfassung des Istwerts P_ist, also z.B. die Messung der Messspannung U_m oder des Messstroms I_m, erfolgt vorzugsweise ebenfalls zeitkontinuierlich oder zeitdiskret. Eine zeitdiskrete Erfassung kann beispielsweise in den Zeitschritten der nachfolgend noch näher beschriebenen Regelung erfolgen. Im mittleren Diagramm ist ersichtlich, dass als Sollwert eine bestimmte konstante Zeit t1_soll (oder t2_soll) vorgegeben ist. Die Steuerungseinheit 13 ist gemäß der Erfindung dazu ausgebildet, die Vorschubeinheit 7 entsprechend anzusteuern, sodass zumindest ein festgelegter Parameter der Vorschubgeschwindigkeit v des Schweißdrahts 8 in den Vorschubzyklen C während des Schweißverfahrens so angepasst wird, dass der gewünschte Sollwert t1_soll, t2_soll oder f_soll erreicht wird.

Als Parameter der Vorschubgeschwindigkeit v kann beispielsweise eine mittlere Vorschubgeschwindigkeit vm jeweils eines gesamten Vorschubzyklus C verwendet werden und/oder eine mittlere positive Vorschubgeschwindigkeit vmZ1 jeweils eines Vorschubzyklus C und/oder eine mittlere negative Vorschubgeschwindigkeit vmZ2 eines Vorschubzyklus C (bei reversierendem Drahtvorschub). Die mittlere Vorschubgeschwindigkeit vm, die mittlere positive Vorschubgeschwindigkeit vmZ1 und die mittlere negative Vorschubgeschwindigkeit vmZ2 sind in Fig.3 beispielhaft für den ersten Vorschubzyklus C dargestellt.

Beispielsweise kann als Istwert t1_ist die Zeitdauer t1 des ersten Zeitraums Z1 jeweils eines Vorschubzyklus C ermittelt werden, wobei als Sollwert ein Sollwert t1_soll für die erste Zeitdauer t1 verwendet wird. Gleichfalls kann als Istwert t2_ist die Zeitdauer t2 des zweiten Zeitraums Z2 jeweils eines Vorschubzyklus C ermittelt werden und als Sollwert ein Sollwert t2_soll für die zweite Zeitdauer t2 verwendet werden. Es kann auch ein Istwert f_ist der Tropfenübergabe-Frequenz f ermittelt werden, was der Summe aus der Zeitdauer t1 des ersten Zeitraums Z1 und der Zeitdauer t2 des zweiten Zeitraums Z2 jeweils eines Vorschubzyklus C entspricht. Als Sollwert kann hierbei ein Sollwert f_soll für die Tropfenübergabe-Frequenz f verwendet werden. In allen drei Fällen können einer oder mehrere der oben genannten Einflussparameter der Vorschubgeschwindigkeit v verändert werden, um den jeweiligen Sollwert einzustellen.

In der Steuerungseinheit 13 kann dazu in vorteilhafter Weise ein geeigneter Regler vorgesehen sein, z.B. ein PI-Regler oder PID-Regler. Der Regler ist dazu ausgebildet, aus dem jeweils ermittelten Istwert, z.B. dem Istwert t1_ist der Zeitdauer t1 der ersten Zeiträume Z1 (oder der ermittelten Istwerte t2_ist der Zeitdauer t2 der zweiten Zeiträume Z2) und aus dem vorgegebenen, vorzugsweise konstanten, Sollwert, z.B. t1_soll, t2_soll oder f_soll, eine Stellgröße S für die Vorschubeinheit 7, insbesondere für die Antriebseinheit 7a, zu ermitteln. Die Steuerungseinheit 13 steuert die Vorschubeinheit 7 dann entsprechend mit der ermittelten Stellgröße S an, um die Vorschubgeschwindigkeit v einzuregeln, wie in Fig.3 dargestellt ist.

Dadurch kann über die laufende Anpassung des festgelegten Parameters, z.B. der mittleren Vorschubgeschwindigkeit vm und/oder der mittleren positiven Vorschubgeschwindigkeit vmZ1 und/oder ggf. der mittleren negativen Vorschubgeschwindigkeit vmZ2, die Kurzschlusszeit t2 oder die kurzschlussfreie Zeit t1 auf einen gewünschten Wert eingeregelt werden. Somit kann automatisch auf die eingangs genannten veränderlichen Einflussparameter (z.B. veränderlicher Abstand X zwischen Elektrode 4a und Werkstück 10, veränderlicher Winkel α zwischen Elektrode 4a und Schweißdraht 8 - siehe Fig.2, oder veränderliche Schweißgeschwindigkeit G in Richtung der Schweißnaht 32 - siehe Fig.3) reagiert werden, was insbesondere beim manuellen Schweißen zu einer verbesserten Schweißqualität führt. Wenn die Schweißgeschwindigkeit G beispielsweise vom Schweißer unbewusst erhöht wird, führt dies in der Regel dazu, dass sich die kurzschlussfreie Zeit t1 automatisch erhöht, weil im Schmelzbad 26 weniger Zusatzstoff vorhanden ist. Durch die erfindungsgemäße Regelung wird hierbei z.B. die mittlere Vorschubgeschwindigkeit vm erhöht und somit automatisch an die erhöhte Schweißgeschwindigkeit G angepasst (und umgekehrt).

Der Sollwert t2_soll für die Kurzschlusszeit t2, der Sollwert t1_soll für die kurzschlussfreie Zeit t1 sowie der Sollwert f_soll für die Tropfenablöse-Frequenz f können als bekannt vorausgesetzt werden und z.B. als fester Wert in der Steuerungseinheit 13 hinterlegt sein. Der Sollwert kann auch von einem Durchmesser des Schweißdrahts 8 und/oder von einem Material des Schweißdrahts 8 und/oder von einem elektrischen Schweißparameter (z.B. dem Schweißstrom I_s oder der Schweißspannung U_s) abhängig sein. Je nach aktuellem Schweißparameter (der aufgrund des gewählten Schweißprogramms als bekannt angesehen werden kann) kann daher automatisch ein entsprechender Sollwert eingestellt werden. Weiters kann der Sollwert auch von der Nahtform (Kehlnaht, V-Naht, usw.) der zu erzeugenden Schweißnaht 32 abhängig sein.

Beispielsweise kann in der Steuerungseinheit 13 eine Funktion für den Sollwert in Abhängigkeit zumindest einer Größe (z.B. der Schweißspannung I_s) hinterlegt sein. Die Steuerungseinheit 13 kann den Sollwert dann aus der Funktion ermitteln. Bei Abhängigkeit des Sollwerts von einer Größe könnte die Funktion beispielsweise in Form einer Kennlinie hinterlegt sein. Bei Abhängigkeit des Sollwerts von mehreren Größen könnte die Funktion z.B. als Kennfeld hinterlegt sein. Natürlich kann der Schweißer ggf. zusätzlich manuelle Einstellungen vornehmen, z.B. über die Benutzerschnittstelle 14. Beispielsweise könnte der voreingestellte Sollwert vom Schweißer anhand einer vorgegebenen, beispielsweise prozentualen, Bandbreite erhöht oder verringert werden.

In Fig.4 ist ersichtlich, dass sich die Dauer der einzelnen Vorschubzyklen C sowie die Höhe der Vorschubgeschwindigkeit v in den jeweiligen Vorschubzyklen C im Laufe der Regelung automatisch verändert, hier insbesondere verringert. Während im ersten dargestellten Zyklus der Fehler, also die Differenz Δt1 zwischen dem Istwert t1_ist und dem Sollwert t1_soll noch relativ groß ist, wird der Fehler durch die Anpassung der Vorschubgeschwindigkeit v so lange verringert, bis sich der Istwert t1_ist, t2_ist auf den vorgegebenen Sollwert t1_soll, t2_soll einstellt. Dies ist beispielhaft im letzten und vorletzten Zyklus in Fig.4 dargestellt, wo der Fehler auf einen hinreichend geringen Wert, vorzugsweise Null, ausgeregelt wurde.

Wie im unteren Diagramm in Fig.4 dargestellt ist, kann es zur Veränderung der mittleren Vorschubgeschwindigkeit vm oder der mittleren positiven Vorschubgeschwindigkeit vmZ1 vorteilhaft sein, wenn am Beginn jedes Vorschubzyklus' C die Vorschubgeschwindigkeit v zunächst für eine gewisse Boost-Zeit tu auf einen höheren ersten positiven Wert v1 eingestellt wird und nach Ablauf der Boost-Zeit tu auf einen relativ dazu geringeren zweiten positiven Wert v2 < v1 reduziert wird. Dies hat sich zudem aufgrund der Massenträgheiten des Schweißdrahts 8 und des Schweißbrenners 3 als vorteilhaft erwiesen. Der erste Wert v1 und/oder das Verhältnis zwischen dem ersten Wert v1 und dem zweiten Wert v2 und/oder eine Länge der Boost-Zeit tu können dabei beispielsweise von der zum jeweils aktuellen Zeitpunkt oder im aktuellen Zeitschritt ermittelten Fehler Δt1 zwischen dem Istwert t1_ist und dem Sollwert t1_soll abhängig sein (bzw. vom Fehler Δt2 zwischen dem ermittelten Istwert t2_ist und dem Sollwert t2_soll). Je größer die jeweilige Differenz Δt1, Δt2 ist, desto höher ist der erste Wert v1 und/oder desto länger ist die Zeit tu, wie anhand der dargestellten Zyklen ersichtlich ist. Das Verhältnis zwischen dem ersten Wert v1 und dem zweiten Wert v2 kann sich somit beispielsweise abhängig vom Fehler Δt1 (oder Fehler Δt2) im Laufe der Regelung ändern.

Das Vorsehen einer Boost-Zeit tu mit erhöhter Vorschubgeschwindigkeit v1 ist aber natürlich nur optional und die mittlere Vorschubgeschwindigkeit vm bzw. die mittlere positive Vorschubgeschwindigkeit vmZ1 könnte beispielsweise auch lediglich durch eine Veränderung des Werets v2 verändert werden.

Wie bereits erwähnt wurde ist die Erfindung nicht auf das beschriebene WIG-Schweißen beschränkt, sondern kann auch beim WIG/Laser-Hybridschweißer oder beim Plasma-Schweißen angewendet werden.

## Patentansprüche

1. Schweißverfahren, wobei auf einem Werkstück (10) im Bereich einer Schweißstelle (25) mittels einer nicht abschmelzenden Elektrode (4a) als Wärmequelle (4) Energie eingebracht wird, um ein Schmelzbad (26) zu erzeugen, wobei dem Schmelzbad (26) ein von der Wärmequelle (4) separater Schweißdraht (8) zugeführt wird und wobei der Schweißdraht (8) durch die eingebrachte Energie im Bereich des Schmelzbades (26) abgeschmolzen wird, um eine Schweißnaht (32) am Werkstück (10) zu erzeugen, **dadurch gekennzeichnet, dass** der Schweißdraht (8) dem Schmelzbad (26) in intermittierenden Vorschubzyklen (C), vorzugsweise mit einer reversierenden Vorschubgeschwindigkeit (v), zugeführt wird, dass während der Durchführung des Schweißverfahrens ein Istwert (t1_ist) einer Zeitdauer (t1) eines ersten Zeitraums (Z1) jeweils eines Vorschubzyklus (C) ermittelt wird, in welchem der Schweißdraht (8) das Schmelzbad (26) nicht berührt und/oder ein Istwert (t2_ist) einer Zeitdauer (t2) eines zweiten Zeitraums (Z2) jeweils eines Vorschubzyklus (C) ermittelt wird, in welchem der Schweißdraht (8) das Schmelzbad (26) berührt, und dass zumindest ein festgelegter Parameter der Vorschubgeschwindigkeit (v) des Schweißdrahts (8) in den Vorschubzyklen (C) in Abhängigkeit des ermittelten Istwerts und eines vorgegebenen Sollwerts verändert wird, wobei als Istwert (t1_ist) die Zeitdauer (t1) des ersten Zeitraums (Z1) jeweils eines Vorschubzyklus (C) ermittelt wird und als Sollwert ein Sollwert (t1_soll) für die erste Zeitdauer (t1) verwendet wird, oder als Istwert (t2_ist) die Zeitdauer (t2) des zweiten Zeitraums (Z2) jeweils eines Vorschubzyklus (C) ermittelt wird und als Sollwert ein Sollwert (t2_soll) für die zweite Zeitdauer (t2) verwendet wird, oder als Istwert (f_ist) eine Summe aus der Zeitdauer (t1) des ersten Zeitraums (Z1) und der Zeitdauer (t2) des zweiten Zeitraums (Z2) jeweils eines Vorschubzyklus (C) ermittelt wird und als Sollwert ein Sollwert (f_soll) für eine Tropfenübergabe-Frequenz (f) verwendet wird.

2. Schweißverfahren nach Anspruch 1, **dadurch gekennzeichnet, dass** als Parameter der Vorschubgeschwindigkeit (v) eine mittlere Vorschubgeschwindigkeit (vm) eines gesamten Vorschubzyklus (C) und/oder eine mittlere positive Vorschubgeschwindigkeit (vmZ1) eines Vorschubzyklus (C) und/oder eine mittlere negative Vorschubgeschwindigkeit (vmZ2) eines Vorschubzyklus (C) verwendet wird.

3. Schweißverfahren nach Anspruch 1 oder 2, **dadurch gekennzeichnet, dass** die mittlere Vorschubgeschwindigkeit (vm) oder die mittlere positive Vorschubgeschwindigkeit (vmZ1) verändert werden, indem am Beginn jedes Vorschubzyklus' (C) die Vorschubgeschwindigkeit (v) für eine festgelegte Boost-Zeit (tu) auf einen festgelegten ersten Wert (v1) eingestellt wird und nach Ablauf der Boost-Zeit (tu) vom ersten Wert (v1) auf einen festgelegten zweiten Wert (v2) verringert wird, wobei der erste Wert (v1) und/oder ein Verhältnis zwischen dem ersten Wert und dem zweiten Wert (v2) und/oder eine Länge der Boost-Zeit (tu) vorzugsweise in Abhängigkeit eines Fehlers (Δt1, Δt2) zwischen dem ermittelten Istwert (t1_ist, t2_ist) und dem vorgegebenen Sollwert (t1_soll, t2_soll) festgelegt werden.

4. Schweißverfahren nach einem der Ansprüche 1 bis 3, **dadurch gekennzeichnet, dass** die Energie über einen elektrischen Lichtbogen (27), der zwischen einer nicht abschmelzenden Elektrode (4a) und dem Werkstück (10) erzeugt wird, und durch einen Laserstrahl, der von einer Laseroptik erzeugt wird, in das Werkstück (10) eingebracht wird.

5. Schweißverfahren nach einem der Ansprüche 1 bis 4, **dadurch gekennzeichnet, dass** der Istwert (t1_ist) der Zeitdauer (t1) des ersten Zeitraums (Z1) und/oder der Istwert (t2_ist) der Zeitdauer (t2) des zweiten Zeitraums (Z2) zeitkontinuierlich oder zeitdiskret ermittelt werden **und/oder** dass der vorgegebene Sollwert durch eine Veränderung des zumindest einen Parameters der Vorschubgeschwindigkeit (v) eingeregelt wird.

6. Schweißverfahren nach einem der Ansprüche 1 bis 5, **dadurch gekennzeichnet, dass** der Sollwert in Abhängigkeit eines Durchmessers des Schweißdrahts (8) und/oder eines Materials des Schweißdrahts (8) und/oder eines elektrischen Schweißparameters, insbesondere eines Schweißstroms (I_s), und/oder einer Nahtform der Schweißnaht (32) festgelegt wird.

7. Schweißverfahren nach einem der Ansprüche 1 bis 6, **dadurch gekennzeichnet, dass** am Schweißdraht (8) ein elektrisches Potential (P_ist) abgegriffen wird und dass der Istwert (t1_ist) der Zeitdauer (t1) des ersten Zeitraums (Z1) und/oder der Istwert (t2_ist) der Zeitdauer (t2) des zweiten Zeitraums (Z2) aus einem zeitlichen Verlauf des erfassten elektrischen Potentials (P_ist) ermittelt wird, wobei das elektrische Potential (P_ist) vorzugsweise abgegriffen wird, indem eine elektrische Messspannung (U_m) zwischen dem Schweißdraht (8) und dem Werkstück (10) und/oder ein durch den Schweißdraht (8) fließender elektrischer Messstrom (I_m) gemessen wird und der Istwert (t1_ist) der Zeitdauer (t1) des ersten Zeitraums (Z1) und/oder der Istwert (t2_ist) der Zeitdauer (t2) des zweiten Zeitraums (Z2) aus einem zeitlichen Verlauf der Messspannung (U_m) und/oder des Messstroms (I_m) ermittelt wird, wobei vorzugsweise zwischen dem Schweißdraht (8) und dem Werkstück (10) ein elektrisches Grundpotential erzeugt wird.

8. Schweißvorrichtung (1) umfassend einen Schweißbrenner (3) mit einer nicht abschmelzenden Elektrode (4a) als Wärmequelle (4) zum Einbringen von Energie an einer Schweißstelle (25) an einem Werkstück (10) zur Erzeugung eines Schmelzbades (26), umfassend eine Vorschubeinrichtung (7) zum Zuführen eines von der Wärmequelle (4) separaten Schweißdrahts (8) zum Schmelzbad (26), wobei der Schweißdraht (8) durch die von der Wärmequelle (4) eingebrachte Energie im Bereich des Schmelzbades (26) abschmelzbar ist, um eine Schweißnaht (32) am Werkstück (10) zu erzeugen und umfassend eine Steuerungseinheit (13) zur Steuerung der Vorschubeinrichtung (7), **dadurch gekennzeichnet, dass** die Steuerungseinheit (13) dazu ausgebildet ist, die Vorschubeinrichtung (7) so anzusteuern, dass der Schweißdraht (8) dem Schmelzbad (26) in intermittierenden Vorschubzyklen (C), vorzugsweise mit einer reversierenden Vorschubgeschwindigkeit (v), zuführbar ist, dass eine Ermittlungseinheit (31) vorgesehen ist, die dazu ausgebildet ist, während eines mit der Schweißvorrichtung (1) durchgeführten Schweißverfahrens einen Istwert (t1_ist) einer Zeitdauer (t1) eines ersten Zeitraums (Z1) jeweils eines Vorschubzyklus (C) zu ermitteln, in welchem der Schweißdraht (8) das Schmelzbad (26) nicht berührt und/oder einen Istwert (t2_ist) einer Zeitdauer (t2) eines zweiten Zeitraums (Z2) jeweils eines Vorschubzyklus (C) zu ermitteln, in welchem der Schweißdraht (8) das Schmelzbad (26) berührt und dass die Steuerungseinheit (13) dazu ausgebildet ist, die Vorschubeinrichtung (7) anzusteuern, um zumindest einen festgelegten Parameter der Vorschubgeschwindigkeit (v) des Schweißdrahts (8) in den Vorschubzyklen (C) in Abhängigkeit des ermittelten Istwerts und eines vorgegebenen Sollwerts zu verändern, wobei der Istwert (t1_ist) die Zeitdauer (t1) des ersten Zeitraums (Z1) jeweils eines Vorschubzyklus (C) ist und der Sollwert ein Sollwert (t1_soll) für die erste Zeitdauer (t1) ist oder der Istwert (t2_ist) die Zeitdauer (t2) des zweiten Zeitraums (Z2) jeweils eines Vorschubzyklus (C) ist und der Sollwert ein Sollwert (t2_soll) für die zweite Zeitdauer (t2) ist oder der Istwert (f_ist) eine Summe aus der Zeitdauer (t1) des ersten Zeitraums (Z1) und der Zeitdauer (t2) des zweiten Zeitraums (Z2) jeweils eines Vorschubzyklus (C) ist und der Sollwert ein Sollwert (f_soll) für eine Tropfenübergabe-Frequenz (f) ist.

9. Schweißvorrichtung (1) nach Anspruch 8, **dadurch gekennzeichnet, dass** der Parameter der Vorschubgeschwindigkeit (v) eine mittlere Vorschubgeschwindigkeit (vm) eines gesamten Vorschubzyklus (C) und/oder eine mittlere positive Vorschubgeschwindigkeit (vmZ1) eines Vorschubzyklus (C) und/oder eine mittlere negative Vorschubgeschwindigkeit (vmZ2) eines Vorschubzyklus (C) enthält.

10. Schweißvorrichtung (1) nach Anspruch 8 oder 9, **dadurch gekennzeichnet, dass** die Steuerungseinheit (13) dazu ausgebildet ist, zur Veränderung der mittleren Vorschubgeschwindigkeit (vm) oder der mittleren positiven Vorschubgeschwindigkeit (vmZ1) am Beginn jedes Vorschubzyklus' (C) die Vorschubgeschwindigkeit (v) für eine festgelegte Boost-Zeit (tu) auf einen festgelegten ersten Wert (v1) einzustellen und die Vorschubgeschwindigkeit (v) nach Ablauf der Boost-Zeit (tu) vom ersten Wert (v1) auf einen festgelegten zweiten Wert (v2) zu verringern, wobei der erste Wert (v1) und/oder ein Verhältnis zwischen dem ersten Wert und dem zweiten Wert (v2) und/oder eine Länge der Boost-Zeit (tu) vorzugsweise in Abhängigkeit eines Fehlers (Δt1, Δt2) zwischen dem ermittelten Istwert (t1_ist, t2_ist) und dem vorgegebenen Sollwert (t1_soll, t2_soll) festgelegt sind.

11. Schweißvorrichtung (1) nach einem der Ansprüche 8 bis 10, **dadurch gekennzeichnet, dass** die Wärmequelle (4) die nicht abschmelzende Elektrode (4a) zur Erzeugung eines elektrischen Lichtbogens (27) zwischen der Elektrode (4a) und dem Werkstück (10) und eine Laseroptik zur Erzeugung eines Laserstrahls aufweist.

12. Schweißvorrichtung (1) nach einem der Ansprüche 8 bis 11, **dadurch gekennzeichnet, dass** die Ermittlungseinheit (31) dazu ausgebildet ist, den Istwert (t1_ist) der Zeitdauer (t1) des ersten Zeitraums (Z1) und/oder den Istwert (t2_ist) der Zeitdauer (t2) des zweiten Zeitraums (Z2) zeitkontinuierlich oder zeitdiskret zu ermitteln, wobei die Ermittlungseinheit (31) vorzugsweise in der Steuerungseinheit (13) integriert ist, **und/oder** dass die Steuerungseinheit (13) einen Regler aufweist, der dazu ausgebildet, aus dem ermittelten Istwert und dem vorgegebenen Sollwert eine Stellgröße (S) für die Vorschubeinheit (7) zu ermitteln und dass die Steuerungseinheit (13) dazu ausgebildet ist, die Vorschubeinheit (7) mit der ermittelten Stellgröße (S) anzusteuern, um den Sollwert einzuregeln.

13. Schweißvorrichtung (1) nach einem der Ansprüche 8 bis 12, **dadurch gekennzeichnet, dass** die Ermittlungseinheit (31) eine Potentialerfassungseinheit (30) aufweist, die dazu ausgebildet ist, am Schweißdraht (8) ein um die Wärmequelle (4) entstehendes elektrisches Potential (P) abzugreifen und dass die Ermittlungseinheit (31) dazu ausgebildet ist, den Istwert (t1_ist) der Zeitdauer (t1) des ersten Zeitraums (Z1) und/oder den Istwert (t2_ist) der Zeitdauer (t2) des zweiten Zeitraums (Z2) aus einem zeitlichen Verlauf des erfassten elektrischen Potentials (P_ist) zu ermitteln, wobei die Potentialerfassungseinheit (30) vorzugsweise eine Spannungsmesseinrichtung (29) zur Erfassung einer elektrischen Messspannung (U_m) zwischen dem Schweißdraht (8) und dem Werkstück (10) und/oder eine Strommesseinrichtung (33) zur Erfassung eines durch den Schweißdraht (8) fließenden elektrischen Messstroms (I_m) aufweist, wobei die Ermittlungseinheit (31) dazu ausgebildet ist, den Istwert (t1_ist) der Zeitdauer (t1) des ersten Zeitraums (Z1) und/oder den Istwert (t2_ist) der Zeitdauer (t2) des zweiten Zeitraums (Z2) aus einem zeitlichen Verlauf der Messspannung (U_m) oder des Messstroms (I_m) zu ermitteln, wobei besonders bevorzugt eine Hilfsenergiequelle vorgesehen ist, mittels der zwischen dem Schweißdraht (8) und dem Werkstück (10) ein elektrisches Grundpotential erzeugbar ist.

14. Schweißvorrichtung (1) nach einem der Ansprüche 8 bis 13, **dadurch gekennzeichnet, dass** der Sollwert von einem Durchmesser des Schweißdrahts (8) und/oder von einem Material des Schweißdrahts (8) und/oder von einem elektrischen Schweißparameter (I_s, U_s), und/oder von einer Nahtform der Schweißnaht (32) abhängig ist.

## Claims

1. A welding method, wherein energy is introduced into a workpiece (10) in the region of a welding point (25) by means of a non-consumable electrode (4a) as a heat source (4) in order to produce a molten bath (26), wherein a welding wire (8) separate from the heat source (4) is fed to the molten bath (26) and wherein the welding wire (8) is melted by the introduced energy in the region of the molten bath (26) in order to produce a weld seam (32) on the workpiece (10), **characterized in that** the welding wire (8) is fed to the molten bath (26) in intermittent feed cycles (C), preferably with a reversing feed speed (v), **in that,** while the welding method is being carried out, an actual value (t1_ist) of a duration (t1) of a first time period (Z1) of a feed cycle (C) is determined in each case, in which first time period (Z1) the welding wire (8) does not come into contact with the molten bath (26) and/or an actual value (t2_ist) of a duration (t2) of a second time period (Z2) of a feed cycle (C) is determined in each case, in which second time period (Z2) the welding wire (8) does come into contact with the molten bath (26), **and in that** at least one specified parameter of the feed speed (v) of the welding wire (8) is changed in the feed cycles (C) depending on the determined actual value and a predefined target value, wherein the duration (t1) of the first time period (Z1) of a feed cycle (C) is determined as the actual value (t1_ist) and a target value (t1_soll) for the first duration (t1) is used as the target value, or the duration (t2) of the second time period (Z2) of a feed cycle (C) is determined as the actual value (t2_ist) and a target value (t2_soll) for the second duration (t2) is used as the target value, or a sum of the duration (t1) of the first time period (Z1) and the duration (t2) of the second time period (Z2) of a feed cycle (C) is determined as the actual value (f_ist) and a target value (f_soll) for a drop transfer frequency (f) is used as the target value.

2. The welding method according to claim 1, **characterized in that** an average feed speed (vm) of an entire feed cycle (C) and/or an average positive feed speed (vmZ1) of a feed cycle (C) and/or an average negative feed speed (vmZ2) of a feed cycle (C) is used as a parameter of the feed speed (v).

3. The welding method according to claim 1 or 2, **characterized in that** the average feed speed (vm) or the average positive feed speed (vmZ1) is changed by setting the feed speed (v) to a defined first value (v1) for a defined boost time (tu) at the beginning of each feed cycle (C) and by reducing it from the first value (v1) to a defined second value (v2) after the boost time (tu) has elapsed, wherein the first value (v1) and/or a ratio between the first value and the second value (v2) and/or a length of the boost time (tu) can preferably be set as a function of an error (Δt1, Δt2) between the determined actual value (t1_ist, t2_ist) and the predefined target value (t1_soll, t2_soll).

4. The welding method according to one of claims 1 to 3, **characterized in that** the energy is introduced into the workpiece (10) via an electric arc (27) produced between a non-consumable electrode (4a) and the workpiece (10) and via a laser beam generated by a laser optics.

5. The welding method according to one of claims 1 to 4, **characterized in that** the actual value (t1_ist) of the duration (t1) of the first time period (Z1) and/or the actual value (t2_ist) of the duration (t2) of the second time period (Z2) are determined continuously or discretely **and/or in that** the predefined target value is adjusted by changing at least one parameter of the feed speed (v).

6. The welding method according to one of claims 1 to 5, **characterized in that** the target value is determined as a function of a diameter of the welding wire (8) and/or of a material of the welding wire (8) and/or of an electrical welding parameter, in particular of a welding current (I_s), and/or of a seam shape of the weld seam (32).

7. The welding method according to one of claims 1 to 6, **characterized in that** an electrical potential (P_ist) is tapped at the welding wire (8) and **in that** the actual value (t1_ist) of the duration (t1) of the first time period (Z1) and/or the actual value (t2_ist) of the duration (t2) of the second time period (Z2) is determined from a time profile of the detected electrical potential (P_ist), wherein the electrical potential (P_ist) is preferably tapped by measuring a measuring voltage (U_m) between the welding wire (8) and the workpiece (10) and/or an electric measuring current (I_m) flowing through the welding wire (8), and the actual value (t1_ist) of the duration (t1) of the first time period (Z1) and/or the actual value (t2_ist) of the duration (t2) of the second time period (Z2) is determined from a time profile of the measuring voltage (U_m) and/or of the measuring current (I_m), wherein, preferably, an electrical ground potential is generated between the welding wire (8) and the workpiece (10).

8. A welding device (1) comprising a welding torch (3) with a non-consumable electrode (4a) as a heat source (4) for introducing energy at a welding point (25) on a workpiece (10) in order to produce a molten bath (26), comprising a feed device (7) for feeding a welding wire (8) separate from the heat source (4) to the molten bath (26), wherein the welding wire (8) can be melted in the region of the molten bath (26) by the energy introduced by the heat source (4) in order to produce a weld seam (32) on the workpiece (10) and comprising a control unit (13) for controlling the feed device (7), **characterized in that** the control unit (13) is designed to control the feed device (7) in such a way that the welding wire (8) can be fed to the molten bath (26) in intermittent feed cycles (C), preferably with a reversing feed speed (v), **in that** a determination unit (31) is provided which is designed to determine, during a welding method carried out with the welding device (1), an actual value (t1_ist) of a duration (t1) of a first time period (Z1) of a feed cycle (C) in each case, in which first time period (Z1) the welding wire (8) does not come into contact with the molten bath (26) and/or to determine an actual value (t2_ist) of a duration (t2) of a second time period (Z2) of a feed cycle (C) in each case, in which second time period (Z2) the welding wire (8) does come into contact with the molten bath (26), **and in that** the control unit (13) is designed to control the feed device (7) in order to change at least one specified parameter of the feed speed (v) of the welding wire (8) in the feed cycles (C) depending on the determined actual value and on a predefined target value, wherein the actual value (t1_ist) is the duration (t1) of the first time period (Z1) of a feed cycle (C) and the target value is a target value (t1_soll) for the first duration (t1) or the actual value (t2_ist) is the duration (t2) of the second time period (Z2) of a feed cycle (C) and the target value is a target value (t2_soll) for the second duration (t2) or the actual value (f_ist) is a sum of the duration (t1) of the first time period (Z1) and the duration (t2) of the second time period (Z2) of a feed cycle (C) and the target value is a target value (f_soll) for a drop transfer frequency (f).

9. The welding device (1) according to claim 8, **characterized in that** the parameter of the feed speed (v) comprises an average feed speed (vm) of an entire feed cycle (C) and/or an average positive feed speed (vmZ1) of a feed cycle (C) and/or an average negative feed speed (vmZ2) of a feed cycle (C).

10. The welding device (1) according to claim 8 or 9, **characterized in that** the control unit (13) is designed to set the feed speed (v) to a defined first value (v1) for a defined boost time (tu) at the beginning of each feed cycle (C) and to reduce the feed speed (v) from the first value (v1) to a defined second value (v2) after the boost time (tu) has elapsed in order to change the average feed speed (vm) or the average positive feed speed (vmZ1), wherein the first value (v1) and/or a ratio between the first value and the second value (v2) and/or a length of the boost time (tu) are preferably defined as a function of an error (Δt1, Δt2) between the determined actual value (t1_ist, t2_ist) and the predefined target value (t1_soll, t2_soll).

11. The welding device (1) according to one of claims 8 to 10, **characterized in that** the heat source (4) comprises the non-consumable electrode (4a) for generating an electric arc (27) between the electrode (4a) and the workpiece (10) and a laser optics for generating a laser beam.

12. The welding device (1) according to one of claims 8 to 11, **characterized in that** the determination unit (31) is designed to determine the actual value (t1_ist) of the duration (t1) of the first time period (Z1) and/or the actual value (t2_ist) of the duration (t2) of the second time period (Z2) continuously or discretely, wherein the determination unit (31) is preferably integrated in the control unit (13), **and/or in that** the control unit (13) has a controller which is designed to determine a manipulated variable (S) for the feed unit (7) from the determined actual value and the predefined target value, and **in that** the control unit (13) is designed to control the feed unit (7) with the determined manipulated variable (S) in order to realize the target value.

13. The welding device (1) according to one of claims 8 to 12, **characterized in that** the determination unit (31) comprises a potential detection unit (30) which is designed to tap an electrical potential (P) on the welding wire (8) which arises around the heat source (4), and **in that** the determination unit (31) is designed to determine the actual value (t1_ist) of the duration (t1) of the first time period (Z1) and/or the actual value (t2_ist) of the duration (t2) of the second time period (Z2) from a time profile of the detected electrical potential (P_ist), wherein the potential detection unit (30) preferably comprises a voltage measuring device (29) for detecting a measuring voltage (U_m) between the welding wire (8) and the workpiece (10) and/or a current measuring device (33) for detecting an electrical measuring current (I_m) flowing through the welding wire (8), wherein the determination unit (31) is designed to determine the actual value (t1_ist) of the duration (t1) of the first time period (Z1) and/or the actual value (t2_ist) of the duration (t2) of the second time period (Z2) from a time profile of the measuring voltage (U_m) or measuring current (I_m), wherein particularly preferably an auxiliary energy source is provided by means of which an electrical ground potential can be generated between the welding wire (8) and the workpiece (10).

14. The welding device (1) according to one of claims 8 to 13, **characterized in that** the target value depends on a diameter of the welding wire (8) and/or on a material of the welding wire (8) and/or on an electric welding parameter (I_s, U_s), and/or on a seam shape of the weld seam (32).

## Revendications

1. Procédé de soudage, dans lequel de l'énergie est apportée sur une pièce (10) dans une zone d'un point de soudage (25) par le biais d'une électrode non fusible (4a) comme source de chaleur (4), afin de produire un bain de fusion (26), dans lequel un fil de soudage (8) séparé de la source de chaleur (4) est amené au bain de fusion (26) et dans lequel le fil de soudage (8) est fondu par l'énergie apportée dans la zone du bain de fusion (26), afin de produire un cordon de soudure (32) sur la pièce (10), **caractérisé, en ce que** le fil de soudage (8) est amené au bain de fusion (26) dans des cycles d'avance (C) intermittents, de préférence avec une vitesse d'avance (v) réversible, **en ce que**, pendant la réalisation du procédé de soudage, une valeur réelle (t1_ist) d'une durée (t1) d'un premier laps de temps (Z1) respectivement d'un cycle d'avance (C) est déterminée, pendant lequel le fil de soudage (8) ne touche pas le bain de fusion (26) et/ou une valeur réelle (t2_ist) d'une durée (t2) d'un second laps de temps (Z2) respectivement d'un cycle d'avance (C) est déterminée, pendant lequel le fil de soudage (8) touche le bain de fusion (26), et **en ce qu'**au moins un paramètre établi de la vitesse d'avance (v) du fil de soudage (8) dans les cycles d'avance (C) est modifié en fonction de la valeur réelle déterminée et d'une valeur de consigne prédéfinie, dans lequel la durée (t1) du premier laps de temps (Z1) respectivement d'un cycle d'avance (C) est déterminée comme valeur réelle (t1_ist) et une valeur de consigne (t1_soll) pour la première durée (t1) est utilisée comme valeur de consigne, ou la durée (t2) du second laps de temps (Z2) respectivement d'un cycle d'avance (C) est déterminée comme valeur réelle (t2_ist) et une valeur de consigne (t2_soll) est utilisée comme valeur de consigne pour la seconde durée (t2), ou une somme de la durée (t1) du premier laps de temps (Z1) et de la durée (t2) du second laps de temps (Z2) respectivement d'un cycle d'avance (C) est déterminée comme valeur réelle (f_ist) et une valeur de consigne (f_soll) pour une fréquence de transfert de gouttes (f) est utilisée comme valeur de consigne.

2. Procédé de soudage selon la revendication 1, **caractérisé en ce qu'**une vitesse d'avance moyenne (vm) d'un cycle d'avance (C) complet et/ou une vitesse d'avance positive moyenne (vmZ1) d'un cycle d'avance (C) et/ou une vitesse d'avance négative moyenne (vmZ2) d'un cycle d'avance (C) est utilisée comme paramètre de la vitesse d'avance (v).

3. Procédé de soudage selon la revendication 1 ou 2, **caractérisé en ce que** la vitesse d'avance moyenne (vm) ou la vitesse d'avance positive moyenne (vmZ1) sont modifiées en réglant, au début de chaque cycle d'avance (C), la vitesse d'avance (v) à une première valeur fixée (v1) pendant un temps d'amplification (tu) établi et en la réduisant de la première valeur (v1) à une seconde valeur (v2) établie après l'écoulement du temps d'amplification (tu), la première valeur (v1) et/ou un rapport entre la première valeur et la seconde valeur (v2) et/ou une longueur du temps d'amplification (tu) étant établis de préférence en fonction d'une erreur (Δt1, Δt2) entre la valeur réelle (t1_ist, t2_ist) déterminée et la valeur de consigne (t1_soll, t2_soll) prédéfinie.

4. Procédé de soudage selon l'une des revendications 1 à 3,
**caractérisé en ce que** l'énergie est apportée à la pièce (10) par l'intermédiaire d'un arc électrique (27), qui est produit entre une électrode non fusible (4a) et la pièce (10), et par l'intermédiaire d'un faisceau laser, qui est produit par une optique laser.

5. Procédé de soudage selon l'une des revendications 1 à 4,
**caractérisé en ce que** la valeur réelle (t1_ist) de la durée (t1) du premier laps de temps (Z1) et/ou la valeur réelle (t2_ist) de la durée (t2) du second laps de temps (Z2) sont déterminées de manière continue ou discrète dans le temps **et/ou en ce que** la valeur de consigne prédéfinie est régulée par une modification d'au moins un paramètre de la vitesse d'avance (v).

6. Procédé de soudage selon l'une des revendications 1 à 5,
**caractérisé en ce que** la valeur de consigne est établie en fonction d'un diamètre du fil de soudage (8) et/ou d'un matériau du fil de soudage (8) et/ou d'un paramètre de soudage électrique, en particulier d'un courant de soudage (I_s), et/ou d'une forme de cordon du cordon de soudure (32).

7. Procédé de soudage selon l'une des revendications 1 à 6,
**caractérisé en ce qu'**un potentiel électrique (P_ist) est prélevé sur le fil de soudage (8) et **en ce que** la valeur réelle (t1_ist) de la durée (t1) du premier laps de temps (Z1) et/ou la valeur réelle (t2_ist) de la durée (t2) du second laps de temps (Z2) est déterminée à partir d'une évolution temporelle du potentiel électrique (P_ist) détecté, dans lequel le potentiel électrique (P_ist) est de préférence prélevé, en mesurant une tension de mesure (U_m) électrique entre le fil de soudage (8) et la pièce (10) et/ou un courant de mesure (I_m) électrique circulant à travers le fil de soudage (8) et en déterminant la valeur réelle (t1_ist) de la durée (t1) du premier laps de temps (Z1) et/ou la valeur réelle (t2_ist) de la durée (t2) du second laps de temps (Z2) à partir d'une évolution temporelle de la tension de mesure (U_m) et/ou du courant de mesure (I_m), dans lequel un potentiel de base électrique est de préférence produit entre le fil de soudage (8) et la pièce (10).

8. Dispositif de soudage (1) comprenant un chalumeau (3) comportant une électrode non fusible (4a) comme source de chaleur (4) pour apporter de l'énergie à un point de soudage (25) sur une pièce (10) pour produire un bain de fusion (26), comprenant un dispositif d'avance (7) pour amener un fil de soudage (8) séparé de la source de chaleur (4) au bain de fusion (26), dans lequel le fil de soudage (8) peut être fondu dans une zone du bain de fusion (26) par l'énergie apportée par la source de chaleur (4), afin de produire un cordon de soudure (32) sur la pièce (10), et comprenant une unité de commande (13) pour commander le dispositif d'avance (7), **caractérisé en ce que** l'unité de commande (13) est conçue pour commander le dispositif d'avance (7) de telle sorte que le fil de soudage (8) est amené au bain de fusion (26) par des cycles d'avance (C) intermittents, de préférence avec une vitesse d'avance (v) réversible, **en ce qu'**il est prévu une unité de détermination (31) qui est conçue pour déterminer, pendant un procédé de soudage réalisé avec le dispositif de soudage (1), une valeur réelle (t1_ist) d'une durée (t1) d'un premier laps de temps (Z1) respectivement d'un cycle d'avance (C), pendant lequel le fil de soudage (8) ne touche pas le bain de fusion (26) et/ou déterminer une valeur réelle (t2_ist) d'une durée (t2) d'un second laps de temps (Z2) respectivement d'un cycle d'avance (C), pendant lequel le fil de soudage (8) touche le bain de fusion (26) et **en ce que** l'unité de commande (13) est conçue pour commander le dispositif d'avance (7) afin de modifier au moins un paramètre établi de la vitesse d'avance (v) du fil de soudage (8) dans les cycles d'avance (C) en fonction de la valeur réelle déterminée et d'une valeur de consigne prédéfinie, dans lequel la valeur réelle (t1_ist) est la durée (t1) du premier laps de temps (Z1) respectivement d'un cycle d'avance (C) et la valeur de consigne est une valeur de consigne (t1_soll) pour la première durée (t1) ou la valeur réelle (t2_ist) est la durée (t2) du second laps de temps (Z2) respectivement d'un cycle d'avance (C) et la valeur de consigne est une valeur de consigne (t2_soll) pour la seconde durée (t2) ou la valeur réelle (f_ist) est une somme de la durée (t1) du premier laps de temps (Z1) et de la durée (t2) du second laps de temps (Z2) respectivement d'un cycle d'avance (C) et la valeur de consigne est une valeur de consigne (f_soll) pour une fréquence de transfert de gouttes (f).

9. Dispositif de soudage (1) selon la revendication 8, **caractérisé en ce que** le paramètre de vitesse d'avance (v) contient une vitesse d'avance moyenne (vm) d'un cycle d'avance (C) complet et/ou une vitesse d'avance positive moyenne (vmZ1) d'un cycle d'avance (C) et/ou une vitesse d'avance négative moyenne (vmZ2) d'un cycle d'avance (C).

10. Dispositif de soudage (1) selon la revendication 8 ou 9,
**caractérisé en ce que** l'unité de commande (13) est conçue pour, afin de modifier la vitesse d'avance moyenne (vm) ou la vitesse d'avance positive moyenne (vmZ1) au début de chaque cycle d'avance (C), régler la vitesse d'avance (v) pour un temps d'amplification (tu) établi à une première valeur (v1) établie et pour réduire la vitesse d'avance (v) après l'écoulement du temps d'amplification (tu) de la première valeur (v1) à une seconde valeur (v2) établie, dans lequel la première valeur (v1) et/ou un rapport entre la première valeur et la seconde valeur (v2) et/ou une longueur du temps d'amplification (tu) sont établis de préférence en fonction d'une erreur (Δt1, Δt2) entre la valeur réelle (t1_ist, t2_ist) déterminée et la valeur de consigne (t1_soll, t2_soll) prédéfinie.

11. Dispositif de soudage (1) selon l'une des revendications 8 à 10, **caractérisé en ce que** la source de chaleur (4) présente l'électrode non fusible (4a) pour produire un arc électrique (27) entre l'électrode (4a) et la pièce (10) et une optique laser pour produire un faisceau laser.

12. Dispositif de soudage (1) selon l'une des revendications 8 à 11, **caractérisé en ce que** l'unité de détermination (31) est conçue pour déterminer la valeur réelle (t1_ist) de la durée (t1) du premier laps de temps (Z1) et/ou la valeur réelle (t2_ist) de la durée (t2) du second laps de temps (Z2) de manière continue ou discrète dans le temps, dans lequel l'unité de détermination (31) est de préférence intégrée dans l'unité de commande (13), et/ou **en ce que** l'unité de commande (13) présente un régulateur qui est conçu pour déterminer une variable de réglage (S) pour l'unité d'avance (7) à partir de la valeur réelle déterminée et de la valeur de consigne prédéfinie, et **en ce que** l'unité de commande (13) est conçue pour commander l'unité d'avance (7) avec la variable de réglage (S) déterminée afin de réguler la valeur de consigne.

13. Dispositif de soudage (1) selon l'une des revendications 8 à 12, **caractérisé en ce que** l'unité de détermination (31) présente une unité de détection de potentiel (30) qui est conçue pour prélever sur le fil de soudage (8) un potentiel électrique (P) qui se forme autour de la source de chaleur (4) et **en ce que** l'unité de détermination (31) est conçue pour déterminer la valeur réelle (t1_ist) de la durée (t1) du premier laps de temps (Z1) et/ou la valeur réelle (t2_ist) de la durée (t2) du second laps de temps (Z2) à partir d'une évolution temporelle du potentiel électrique (P_ist) détecté, dans lequel l'unité de détection de potentiel (30) présente de préférence un dispositif de mesure de tension (29) pour détecter une tension de mesure (U_m) électrique entre le fil de soudage (8) et la pièce (10) et/ou un dispositif de mesure de courant (33) pour détecter un courant de mesure (I_m) électrique circulant à travers le fil de soudage (8), dans lequel l'unité de détermination (31) est conçue pour déterminer la valeur réelle (t1_ist) de la durée (t1) du premier laps de temps (Z1) et/ou la valeur réelle (t2_ist) de la durée (t2) du second laps de temps (Z2) à partir d'une évolution temporelle de la tension de mesure (U_m) ou du courant de mesure (I_m), dans lequel une source d'énergie auxiliaire est prévue de manière particulièrement préférée, par le biais de laquelle un potentiel électrique de masse peut être produit entre le fil de soudage (8) et la pièce (10).

14. Dispositif de soudage (1) selon l'une des revendications 8 à 13, **caractérisé en ce que** la valeur de consigne dépend d'un diamètre du fil de soudage (8), et/ou d'un matériau du fil de soudage (8), et/ou d'un paramètre de soudage électrique (l_s, U_s), et/ou d'une forme de cordon du cordon de soudure (32).
